**Europäisches Patentamt**

(19) **European Patent Office**

**Office européen des brevets**

(11) Veröffentlichungsnummer : **0 324 753 B1**

(12) **EUROPÄISCHE PATENTSCHRIFT**

(45) Veröffentlichungstag der Patentschrift :
04.12.91 Patentblatt 91/49

(51) Int. Cl.$^5$ : **C04B 7/24**

(21) Anmeldenummer : **87906069.7**

(22) Anmeldetag : **17.09.87**

(86) Internationale Anmeldenummer :
**PCT/DE87/00420**

(87) Internationale Veröffentlichungsnummer :
**WO 88/01989 24.03.88 Gazette 88/07**

(54) **VERFAHREN ZUR HERSTELLUNG EINES CALCIUMSULFATHALTIGEN FESTEN SEKUNDÄRROHSTOFFES.**

(30) Priorität : **18.09.86 DE 3631757**

(43) Veröffentlichungstag der Anmeldung :
**26.07.89 Patentblatt 89/30**

(45) Bekanntmachung des Hinweises auf die
Patenterteilung :
**04.12.91 Patentblatt 91/49**

(84) Benannte Vertragsstaaten :
**AT BE CH DE FR GB IT LI LU NL SE**

(56) Entgegenhaltungen :
**DE-A- 1 471 600**
**DE-A- 2 511 109**
**US-A- 4 249 951**
**US-A-38 705 353**

(56) Entgegenhaltungen :
**Chemical Abstracts, vol. 96, No. 18, May 1982, (Columbus, Ohio, US), A. Puri et al.:
"Research on the utilization of some flotation tailings as raw materials for the portland cement production", see page 334, abstract 147866c, & Mater. Constr. (Bucharest) 1981, 11(4), 181-4**

(73) Patentinhaber : **BÖLSING, Friedrich
Danziger Strasse 5
W-3067 Lindhorst (DE)**

(72) Erfinder : **BÖLSING, Friedrich
Danziger Strasse 5
W-3067 Lindhorst (DE)**

(74) Vertreter : **Eggert, Hans-Gunther, Dr.
Räderscheidtstrasse 1
W-5000 Köln 41 (DE)**

## Beschreibung

Zur Herstellung von Portlandzement wird ein dem hydraulischen Mörtel entsprechendes Gemisch basischer und saurer Bestandteile zu Klinker gebrannt. Es ist bekannt, daß sich für diesen Prozess ersatzweise bestimmte, als Abfallstoffe geltende Stoffe mit verwenden lassen, um sie zu entsorgen und zugleich den Heizwert ihrer brennbaren Anteile zu nutzen. So werden kontaminierte Altöle, mit organischen Kohlenwasserstoffen beladene gebrauchte Bleicherden, Säureharze und dergleichen bei der Klinkerherstellung mit eingesetzt. Das ist allerdings nur in dem Maße ohne Nachteil durchführbar, als sich diese Materialien ohne weitere Aufbereitung in konventionellen Einrichtungen, wie z.B. Altöle bei der Primärfeuerung, verbrennen lassen. Wenn die Abfallstoffe in klebriger oder hochviskoser Form vorliegen, oder bei ihrer Verbrennung giftige Gase freisetzen, bedarf es Vorkehrungen, die ihren Einsatz beim Zementklinkerbrand erschweren. Das gilt insbesondere für die sogenannten Säureharze, die in Altölraffinerien anfallen und im Mittel zu 62 - 66 % aus organischen Verbindungen wie Ölen und harzigen Polymerisationsprodukten und zu 22 - 66 % aus zum Teil chemisch gebundener Schwefelsäure bestehen. Die Konsistenz der Säureharze reicht von flüssig bis fest. Mit Wasser sind sie nicht mischbar.
Um ihre Handhabung zu erleichtern, ist schon vorgeschlagen, sie durch eine dispergierende chemische Reaktion mit Calciumoxid in staubförmige Feststoffzubereitungen zu überführen, in denen aber dann der Mineralanteil sehr hoch und der Heizwert sehr niedrig wird (DE-PS 25 33 790).

Das gleiche gilt für die Neutralisation von Säureharz unter Zugabe von wässrigen Kalkhydrat oder Calciumcarbonat-Lösungen. Hier muß das verwendete Wasser wieder aufgearbeitet werden, um den Abwasservorschriften zu entsprechen.
Es ist demzufolge auch schon vorgeschlagen, das Säureharz kontinuierlich bei erhöhter Temperatur und erhöhtem Druck mit alkalischen Hydroxyden zu vermischen (DE-AP 25 05 373). Derartige Verfahren erfordern aber aufwendige Apparaturen und teure Hilfschemikalien und der Heizwert der Reaktionsprodukte ist wiederum gering.

Der Erfindung liegt die Aufgabe zugrunde, aus schwefelsäurehaltigen Abfällen einen calciumsulfathaltigen festen Sekundärrohstoff für eine technische Wiederverwertung, z.B. in Verbrennungsanlagen oder bei der Gewinnung von Portlandzementklinker, zu erzeugen.

Gelöst wird diese Aufgabe erfindungsgemäß dadurch, daß man Abfallkohlenwasserstoffe mit Abfallschwefelsäuren und/oder sauren Abfallschwefelsäurederivaten vermischt und dieses Gemisch mit solchen M.engen einer wässrigen Suspension von Kalksteinmehl und/oder calciumcarbonathaltigen Flugstäuben umsetzt, daß das Reaktionsprodukt von selbst aushärtet.

Abfallkohlenwasserstoffe für die Zwecke der Erfindung sind u.a. Altöl, kontaminierte Altöle, polychlorierte Biphenyle, dioxinhaltige Öle, bituminöse Abfallstoffe, mit Kohlenwasserstoffen beladene gebrauchte Bleicherden, makromolekulare Abfallstoffe oder die Inhaltsstoffe von Öllagunen.

Auch die erforderliche Schwefelsäure oder die Säurederivate, hauptsächlich Sulfonsäuren, Monoalkylund Monoarylsulfate, werden vorzugsweise dem Abfallsektor entnommen. Hierzu gehören auch die schon erwähnten Säureharze, die insofern eine Sonderstellung einnehmen, als sie auch bereits Abfallkohlenwasserstoffe enthalten, die aber erfindungsgemäß vorzugsweise mit den anderen genannten Abfallkohlenwasserstoffen versetzt und demzufolge nur in solchen Menger. gebraucht werden, wie das zur Überführung der flüssigen oder schmierigen Abfallkohlenwasserstoffe in ein festes Produkt durch die Calciumsulfatbildung nötig ist.

Zur Neutralisation bzw. Calciumsulfatbildung dienen Kalksteinmehl und/oder calciumcarbonathaltige Flugstäube, wie sie in der Zement- und Kalkindustrie oder bei anderen technischen Prozessen anfallen. Es schadet nichts, wenn die calciumcarbonathaltigen Pulver inerte oder hydraulisch abbindende Komponenten enthalten, die im. Zementprozess zu Klinkerbestandteilen werden.

Es hängt von der Konstitution und Zusammensetzung der kohlenwasserstoffhaltigen Abfälle ab, welche Mengen Abfallschwefelsäure oder ihrer Derivate und der calciumcarbonathaltigen Neutralisationsmittel gerade notwendig sind, um ihre Verfestigung durch die Bildung von Calciumsulfat als Halb-, Di-, oder Decahydrat zu erreichen. Weil auch die Konsistenz der Abfallkohlenwasserstoff- oder der Säurekomponente zweckmäßig so gewählt wird, daß ihr Gemisch relativ dünnflüssig und daher auch besser mit der Suspension der calciumcarbonathaltigen Substanzen mischbar ist, bleibt die Kohlendioxidentwicklung, die bisher soviel Schwierigkeiten verursachte, geringer und technisch leichter beherrschbar.

Falls sich die Kohlenwasserstoffkomponente und die Schwefelsäurekomponente aufgrund ihrer chemischen Beschaffenheit nicht ohne weiteres homogen mischen lassen, können für die Neutralisation oberflächenaktive Mittel zugesetzt werden, die gegen Schwefelsäure beständig sind, wie z.B. Petroleumsulfonat.

Bei der für die Erhärtung zulässigen bzw. für die Hydratbildung des Calciumsulfats erforderlichen Wassermengen ist bei Mehrphasensystemen auch das Wasser zu berücksichtigen, das in den Abfallkohlenwasserstoffen und in den Schwefelsäure enthaltenden Abfallprodukten vorkommt. In jedem Fall wird die Menge an Schwefelsäure und ihren Derivaten und die des Kalksteinmehls und/oder der calciumcarbonathaltigen Flugstäube so bemessen, daß nach intensiver Durchmischung das Reaktionsprodukt spontan aushärtet. Die Mengen sind naturgemäß abhängig von der Zusammensetzung der jeweiligen Abfallstoffe. Sie lassen sich in einem einfachen Handversuch nach den üblichen Methoden bestimmen. Eine Übercosierung der basischen Komponenten ist möglich, vermindert aber den Heizwert.

Durch Änderung der Mengenverhältnisse lassen sich auch die Aushärtungszeiten einstellen. Dies ist bedeutsam, wenn das Reaktionsprodukt vor seiner Aushärtung zu Granulaten geformt werden soll, was die Handhabung wesentlich erleichtert. Die Formgebung zu körnigen oxer zylindrischen Granulaten erfolgt durch Verrollen, z.B. in einer Rolliertrommel oder auf einem Rollierteller bzw. durch Verpressen, z.B. in einer Strangpresse. Durch die Formgebung lassen sich nahezu staubfreie Sekundärrohstoffe herstellen, die leicht zu transportieren und zu dosieren sind.

Falls die Beschaffenheit der Abfallstoffe dies verlangt, können die gewonnenen Granulate vor ihrer Aushärtung mit einem Antibackmittel eingestäubt werden, um ein nachträgliches Zusammenbacken zu verhindern. Wenn hierfür hydrophobiertes Calciumoxid oder -hydroxid verwendet wird, so läßt sich die Aushärtung nach der Formgebung beschleunigen.

Die erfindungsgemäß hergestellten festen Sekundärrohstoffe lassen sich nicht nur für die Gewinnung von Portlandzementklinker, sondern auch als Brennstoff oder Entschwefelungsadditiv in Verbrennungsanlagen verwenden. Auch in diesem Fall wird der Nachteil behoben, daß die genannten Abfallstoffe als solche schlecht zu handhaben sind und nur schwierig verarbeitet werden können. Wenn sie aber mit dem erfindungsgemäßen Verfahren in einen calciumsulfathaltigen festen Sekundärrohstoff übergeführt wurden, können sie gefahrlos mit verbrannt werden, auch wenn sie Problemstoffe wie halogenierte Aromaten enthalten. Als Entschwefelungsadditiv wird die Energie der Abfallstoffe genutzt und gleichzeitig die basische Entschwefelungskomponente in den Verbrennungsprozeß eingebracht.

Die folgenden Beispiele erläutern die Erfindung:

## Beispiel 1

Ein homogenes Gemisch aus einem Gewichtsteil eines bituminösen Abfallkohlenwasserstoffs aus einer Öllagune und 0,2 Gewichtsteilen einer 80 %igen Abfallschwefelsäure gibt man unter Rühren zu einer Suspension aus 0,5 Gewichtsteilen Zementflugstaub und 0,4 Gewichtsteilen Kalksteinmehl in 0,3 Gewichtsteilen Wasser. Das Reaktionsprodukt wird in einer Strangpresse mit Lochscheibe verpreßt. Die Aushärtung des zylindrischen Granulats erfolgt in etwa zwei Stunden beim Stehen an der Luft. Der so erhaltene feste Sekundärrohstoff für die Porthlandzementklinkerherstellung hatte einen Mineralanteil von 43 %, davon 68 % $CaSO_4 \cdot 2 H_2O$ und einen Heizwert von 4600 kcal/kg. Bei Zugabe von etwa 2 Gewichtsteilen Calciumoxid mit 1 % Hydrophobierungsmittel erfolgt eine oberflächliche Aushärtung bereits nach einer halben Stunde.

## Beispiel 2

Ein Gewichtsteil gebrauchter Bleicherde aus der Vaselineherstellung mit einem Kohlenwasserstoffanteil von 30-35 Gewichtsprozent wird mit 1,5 Gewichtsteilen Wasser homogenisiert. Dann fügt man 2 Gewichtsteile Kalksteinmehl hinzu und homogenisiert nochmals. Zu diesem breiigen Gemisch gibt man unter Rühren 2 Gewichtsteile Saüreharz aus der Altöllaufbereitung. Es resultiert ein streufähiges Material, das durch Kneten oder Zerschlagen in einem schnell laufenden Mischer plastisch verformbar wird. Eine Regulierung der Konsistenz durch Wassezugabe ist auch noch nach erfolgter Neutralisation möglich. In der Strangpresse erhält man ein zylindrischesun in einer Rolliertrommel mit rotierenden Messern ein körniges Granulat.

Ein Zusammenkleben des Granulats kann durch Einstäuben mit wenig hydrophobiertem Calciumoxid verhindert werden. Danach läßt man das Endprodukt an der Luft antrocknen und schließlich aushärten. Man erhält ein festes Granulat mit einem $CaSO_4 \cdot 2H_2O$-Gehalt von 13 % und einem Heizwert von 4550 kcal/kg.

## Beispiel 3

4 Gewichtsteile Zementflugstaub, 2 Gewichtsteile gebrauchte Bleicherde und 2 Gewichtsteile Wasser werden homogenisiert. Anschließend gibt man 1 Gewichtsteil Säureharz unter Rühren hinzu. Der Anteil an Bleicherde kann in weiten Grenzen variiert werden. Danach verfährt man wie in Beispiel 2 beschrieben und erhält ein festes Granulat mit einem $CaSO_4 \cdot 2H_2O$-Gehalt von 4 % und einem Heizwert von 1650 kcal/kg.

## Beispiel 4

4 Gewichtsteile Zementflugstaub und 1,5 Gewichtsteile Wasser werden homogenisiert. Anschließend gibt man ein homogenes Gemisch aus 0,5 Gewichtsteilen Säureharz und 0,5 Gewichtsteilen eines Altöls hinzu. Das weitere Vorgehen entspricth dem Beispiel 2 und man erhält ein festes Granulat mit einem $CaSO_4 \cdot 2H_2O$-Gehalt von 6 % und einem Heizwert von 1700 kcal/kg.

## Beispiel 5

Ein zuvor hergestelltes Gemisch aus einem hochviskosen, mit polychlorierten Biphenylen kontaminiertem Abfallöl und einem Säureharz mit etwa 50 % Säuregehalt, dessen Anteil ca. 15 % beträgt, wird mit 1,4 Gewichtsteilen eines Filterstaubes aus der Kalkindustrie, der überwiegend aus Kalksteinmehl besteht, und der mit 10 % seines Gewichts an Wasser angefeuchtet wurde, in einem Pflugscharmischer homogenisiert. Im Mischvorgang bildet sich nach wenigen Minuten spontan ein Granulat, das nach dem Einstäuben mit hydrophobiertem Calciumoxid schnell härtet. Dieser Sekundärrohstoff läßt sich unter Ausnutzung seines Heizwertes von ca. 2.400 kcal/kg als Material zur Rauchgasentschwefelung in einer Wirbelschichtfeuerung verwenden. Der Vorteil dieser Art der Wiederverwertung liegt nicht nur in der Nutzung organischer Abfallstoffe als Brennstoff unter gleichzeitiger Nutzung des basischen Trägerstoffs als Entschwefelungsmaterial, sondern vor allem darin, daß auch gefährliche organische Abfallstoffe in der basischen Umgebung schadlos zu beseitigen sind. Die nach der Verbrennung aufgefangenen anorganischen Komponenten lassen sich bis zur Erschöpfung in den Weideraufbereitungsprozeß zurückführen.

Beispiel 6

5,6 Gewichtsteile eines Schwerölrückstandes werden mit 5,6 Gewichtsteilen einer kohlenstoffhaltigen Asche aus einem Trockenfeuerungskraftwerk mit etwa 20 % verbrennbaren Anteilen unter Zugabe von 0,5 Gewichtsteilen Abfallschwefelsäure gemischt. Diese Mischung arbeitet man mit Hilfe eines Kneters in ein Gemisch aus 4,2 Gewichtsteilen Kalksteinmehl und 0,5 Gewichtsteilen Wasser ein. Das Reaktionsgemisch läßt sich leicht granulieren, und das Granulat härtet schnell aus, wenn man es mit Calciumoxid einstäubt. Dieser Sekundärrohstoff läßt sich als Energieträger in Kraftwerken verwenden und liefert wegen seines Anteils an Kalksteinmehl eine leicht schmelzende Schlacke mit Glühverlusten unter 5 %, die als Betonzuschlagstoff geeignet ist.

**Patentansprüche**

1. Verfahren zur Herstellung eines calciumsulfathaltigen festen Sekundärrohstoffes dadurch gekennzeichnet, daß man Abfallkohlenwasserstoffe mit Abfallschwefelsäuren und/oder sauren Abfallschwefelsäurederivatenvermischt une dieses Gemisch in Gegenwart mindestens des zur Hydratation von Calciumsufat erforderlichen Wassers mit solchen Mengen von Kalksteinmehl und/oder calciumcarbonathaltigen Flugstäuben umsetzt, daß des Reaktionsprodukt von selbst aushärtet.

2. Verfahen nach Anspruch 1, dadurch gekennzeichnet, daß eine wässrige Suspension von Kalksteinmehl eingesetzt wird.

3. Verfahren nach Anspruch 1 oder 2, dadurch gekennzeichnet, das das Reaktionsprodukt vor der Aushärtung zu Granulaten geformt wird.

4. Verfahren nach einem der Ansprüche 1 bis 3, dadurch gekennzeichnet, daß die gewonnenen Granulate vor ihrer Aushärtung mit einem Antibackmittel eingestäubt werden.

5. Verfahren nach Anspruch 4, dadurch gekennzeichnet, daß als Antibackmittel hydrophobiertes Calciumoxyd oder Calciumhydroxyd eingesetzt wird.

6. Verfahren nach einem der Ansprüche 1 bis 5, dadurch gekennzeichnet, daß bei der Umsetzung beständige oberflächenaktive Mittel zugesetzt werden.

7. Verfahren nach einem der Ansprüche 1 bis 6, dadurch gekennzeichnet, daß als Abfallkohlenwasserstoffe Altöle, kontaminierte Altöle, polychlorierte Biphenyle, dioxinhaltige Öle, bituminöse Abfallstoffe, kohlenwasserstoffbeladene gebrauchte Bleicherden makromolekulare Abfallstoffe oder die Inhaltsstoffe von Öllagunen eingesetzt werden.

8. Verfahren nach einem der Ansprüche 1 bis 7, dadurch gekennzeichnet, daß als Abfallschwefelsäure bzw. Abfallschwefelsäurederivat Säureharze verwendet werden.

9. Verwendung der nach einem der Ansprüche 1 bis 8 erzeugten festen Sekundärrohstoffe für die Gewinnung von Portlandzementklinder.

10. Verwendung der nach einem der Ansprüche 1 bis 8 erzeugten festen Sekundärrohstoffe als Brennstoff in Verbrennungsanlagen.

11. Verwendung der nach einem der Ansprüche 1 bis 8 erzeugten festen Sekundärrohstoffe als Entschwefelungsadditiv in Verbrennungsanlagen.

**Claims**

1. Method for producing a calcium sulphate-containing solid secondary raw material, characterised in that waste hydrocarbons are mixed with waste sulphuric acids and/or acidic waste sulphuric acid derivatives and this mixture is reacted, in the presence of at least the water required for hydration of calcium sulphate, with such quantities of powdered limestone and/or calcium carbonate-containing flue dust that the reaction product hardens by itself.

2. Method according to Claim 1, characterised in that an aqueous suspension of powdered limestone is used.

3. Method according to Claim 1 or 2, characterised in that the reaction product is formed into granules before hardening.

4. Method according to one of Claims 1 to 3, characterised in that the granules obtained are powdered with an anti-caking agent before hardening.

5. Method according to Claim 4, characterised in that water-repellent calcium oxide or calcium hydroxide is used as an anti-caking agent.

6. Method according to one of Claims 1 to 5, characterised in that resistant surface-active agents are added during the reaction.

7. Method according to one of Claims 1 to 6, characterised in that waste oils, contaminated waste oils, polychlorinated biphenyls, dioxin-containing oils, bituminous waste substances, hydrocarbon-laden spent bleaching earths, macromolecular waste substances or the contents of oil lagoons are used as waste hydrocarbons.

8. Method according to one of Claims 1 to 7, characterised in that acid sludges are used as the waste sulphuric acid or waste sulphuric acid derivative.

9. Use of the solid secondary raw materials produced according to one of Claims 1 to 8 for obtaining Portland cement clinker.

10. Use of the solid secondary raw materials produced according to one of Claims 1 to 8 as fuels in combustion plants.

11. Use of the solid secondary raw materials produced according to one of Claims 1 to 8 as a desulphurisation additive in combustion plants.

lisés sont des huiles usées, des huiles usées et contaminées, des biphényles polychlorés, des huiles contenant de la dioxine, des déchets bitumineux, des terres décolorantes usées chargées d'hydrocarbures, des déchets macro-moléculaires ou des composants de lagunes pétrolifères.

8. Procédé selon l'une des revendications 1 à 7, caractérisé en ce que les résidus d'acide sulfurique ou les dérivés de résidus d'acide sulfurique utilisés sont des résines acides.

9. Utilisation de matières brutes secondaires solides produites selon l'une des revendications 1 à 8 pour la production de klinker de ciment Portland.

10. Utilisation de matières brutes secondaires solides produites selon l'une des revendications 1 à 8 comme combustible dans des installations de combustion.

11. Utilisation de matières brutes secondaires solides produites selon l'une des revendications 1 à 8 comme additif de désulfuration dans des installations de combustion.

**Revendications**

1. Procédé de fabrication d'une matière brute secondaire solide, contenant du sulfate de calcium, caractérisé en ce qu'on mélange des résidus d'hydrocarbures avec des résidus d'acide sulfurique et/ou des dérivés acides de résidus d'acide sulfurique et on transforme ce mélange, en présence d'au moins l'eau nécessaire à l'hydratation du sulfate de calcium, par des quantités telles de calcaire en poudre et/ou de poussières volantes contenant du carbonate de calcium, que le produit de la réaction durcisse de lui-même.

2. Procédé selon la revendication 1, caractérisé en ce qu'une suspension aqueuse de calcaire en poudre est utilisée.

3. Procédé selon la revendication 1 ou 2, caractérisé en ce que le produit de la réaction est mis avant le durcissement sous forme de granulés.

4. Procédé selon l'une des revendications 1 à 3, caractérisé en ce qu'un agent anti-agglomérant est pulvérisé sur les granulés obtenus avant leur durcissement.

5. Procédé selon la revendication 4, caractérisé en ce que le produit anti-agglomérant utilisé est de l'oxyde de calcium rendu hydrophobe ou de l'hydroxyde de calcium.

6. Procédé selon l'une des revendications 1 à 5, caractérisé en ce qu'un agent tensio-actif stable est ajouté pendant la transformation.

7. Procédé selon l'une des revendications 1 à 6, caractérisé en ce que les résidus d'hydrocarbures uti-